Europäisches Patentamt

European Patent Office

Office européen des brevets

(19)

(11) Publication number: **0 492 445 A2**

# EUROPEAN PATENT APPLICATION

(12)

(21) Application number: **91121798.2**

(22) Date of filing: **19.12.91**

(51) Int. Cl.5: **B60J 5/06**

(30) Priority: **27.12.90 IT 2254290**

(43) Date of publication of application:
**01.07.92 Bulletin 92/27**

(84) Designated Contracting States:
**DE ES FR GB IT**

(71) Applicant: **MAURI & C. S.a.s. di MAURI Ambrogio e ZORLONI Costanza Via Togliatti, 4**

**I-20033 Desio (Prov. of Milano)(IT)**

(72) Inventor: **Mauri, Ambrogio**
**Via Garibaldi, 254**
**I-20033 Desio (Prov. of Milan)(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Door leaf with combined rotary-translatory motion.**

(57) Door leaf with combined rotary-translatory motion, particularly for transport vehicles and the like, which comprises a door leaf (1) which has one vertical side (2b) tapered from the bottom upward. The door leaf (1) is connected, by means of adjustable lever systems (9,11), to a vertical shaft (3) for the actuation of the motion of the door leaf (1) itself. The vertical actuation shaft (3) has a shape which is complementary to the taper (2b) of the door leaf and is connected, by means of lever systems, within an upper cross-member (4) of a front door of a transport vehicle, to means for selectively actuating the opening and closing of the door leaf.

Fig. 2

The present invention relates to a door leaf with combined rotary-translatory motion, particularly for transport vehicles and the like.

In passenger transport vehicles, such as buses, coaches and the like, there is a technical problem related to the conditioning and comfort of the driver of the vehicle, or rather to the optimum execution of the driver's compartment in order to reduce the driver's discomfort and to prevent any possible physical damage to the driver himself.

Current statutory provisions presently require the front access doors of a bus for urban or suburban use to be completely located in the front cantilever portion of the body, laterally to the driver's compartment. Access doors are currently constituted by pairs of leaves which have a rectangular shape, thus requiring, due to structural reasons, the shape of the front of the vehicle to be of a substantially vertical profile.

Even if travel speeds are extremely low, especially in urban areas, such vertical front of the passenger transport vehicle is a considerable aerodynamic brake, causing rather high fuel consumption which leads to a cost increase for public transportation companies.

Furthermore, the dimensions of the driver's compartment are excessive, especially in terms of height and profile, thus constituting a severe problem from the point of view of summer and winter air conditioning. The air conditioning of the driver's compartments is in fact currently particularly inefficient.

The aim of the present invention is to eliminate or substantially reduce the disadvantages described above in known types by providing a door leaf with combined rotary-translatory motion particularly for transport vehicles and the like which allows to improve the streamline of the vehicle.

Within the scope of this aim, an object of the present invention is to provide a door leaf with combined rotary-translatory motion which allows to reduce the dimensions of the driver's compartment of the vehicle in order to improve its comfort and conditioning.

Another object of the present invention is to provide a door leaf with combined rotary-translatory motion which allows to save fuel for the management of the passenger transport vehicle.

Not least object of the present invention is to provide a door leaf with combined rotary-translatory motion which is relatively easy to manufacture and at competitive costs.

This aim, the objects mentioned and others which will become apparent hereinafter are achieved by a door leaf with combined rotary-translatory motion particularly for transport vehicles and the like, according to the invention, characterized in that it comprises a door leaf which has one vertical side tapered from the bottom upward and is connected, by means of adjustable lever systems, to a shaft for actuating the motion of said door leaf, the shape of said shaft being complementary to the taper of said door leaf, said shaft being connected, by means of lever systems, within an upper cross-member preferably of a front door of a transport vehicle, to means for the selective actuation of the opening and closing of said door leaf.

Further characteristics and advantages of the invention will become apparent from the description of a preferred but not exclusive embodiment of a door leaf with combined rotary-translatory motion, particularly for transport vehicles and the like, according to the invention, illustrated only by way of non-limitative example in the accompanying drawings, wherein:

figure 1 is a lateral elevation view of a transport vehicle provided with a door leaf with combined rotary-translatory motion according to the present invention;

figure 2 is a front elevation view of a door leaf with combined rotary-translatory motion according to the invention, taken from the inside of the vehicle in closed position;

figure 3 is a front elevation view of a door leaf with combined rotary-translatory motion according to the invention, taken from the outside of the vehicle in closed position;

figure 4 is a front elevation view of a door leaf with combined rotary-translatory motion according to the invention, taken from the outside of the vehicle in open position;

figure 5 is a front elevation view of a door leaf with combined rotary-translatory motion according to the invention, seen from the front of the vehicle, in open position;

figure 6 is a plan view of a door leaf with combined rotary-translatory motion according to the invention in closed position;

figure 7 is a plan view of a door leaf with combined rotary-translatory motion according to the invention in a position intermediate between closing and opening;

figure 8 is a plan view of a door leaf with combined rotary-translatory motion according to the invention in open position;

figure 9 is a plan view of actuation means for the opening and closing of the door leaf according to the invention; and

figure 10 is a plan view of a ring for the angular setting of the opening and closure of the door leaf with combined rotary-translatory motion.

With reference to the described figures, a door leaf with combined rotary-translatory motion particularly for transport vehicles and the like is characterized in that it comprises a door leaf, generally designated by the reference numeral 1, which has a vertical side 2 tapered from the bottom upward. Or rather, a portion 2a of the side 2 has a vertical profile, whereas a portion 2b tapers from the bottom upward.

The door leaf 1 is connected, by means of adjustable lever systems, as will become apparent hereinafter, to a shaft 3 for actuating the motion of the door leaf 1. The shaft 3 is shaped complementarily to the taper of the side 2 of the door leaf 1, i.e. it has a vertical lower portion and an inclined middle portion which connects the lower portion to the upper portion, which is also vertical.

The shaft 3 is connected, by means of lever systems, as will become apparent hereinafter, within an upper cross-member 4, for example, of a front door 5 of a transport vehicle 6, to means for the selective actuation of the opening and closing of the door leaf.

The adjustable lever systems are pivoted to the floor 8, for example, of the vehicle 6 at a pivoting point 7 and comprise a first arm 9, which connects the pivoting point 7 of the adjustable lever systems to a pivoting point 10 of the door leaf 1, and a second arm 11 which connects the pivoting point 7 to the lower end of the actuation shaft 3. The first arm 9 comprises two branches which delimit an obtuse angle between them.

The first arm 9 and the second arm 11 can be rigidly rotationally associated by means of an angular setting ring 12 located on the pivoting point 7.

The selective actuation means comprise a cylinder-and-piston unit 13 which is located within the upper cross-member 4 of the door 5 and is fixed to the vehicle 6 so that it can move angularly. The piston 14 of the unit 13 is fixed eccentrically to the upper end of the actuation shaft 3 by means of the lever system constituted by a third arm 15.

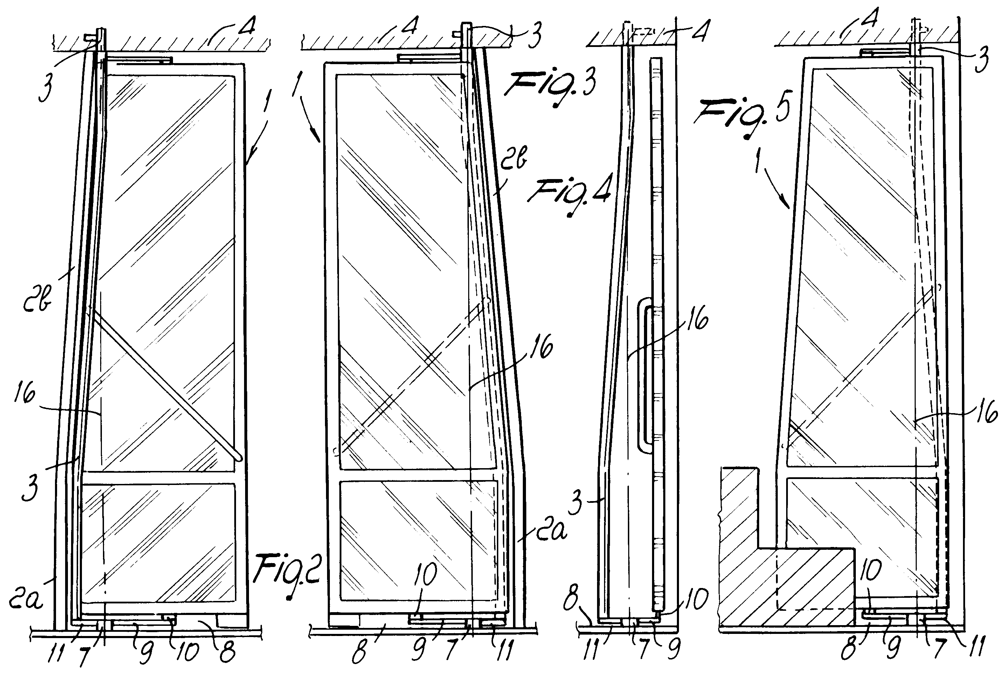

The pivoting point 7 defines a rotation axis which is indicated in figures 2, 3, 4 and 5 by the dot-and-dash line designated by the reference numeral 16. The upper end of the actuation shaft 3, which is connected to the third arm 15, is coaxial to the rotation axis 16, thus facilitating the combined rotary-translatory motion of the door leaf 1.

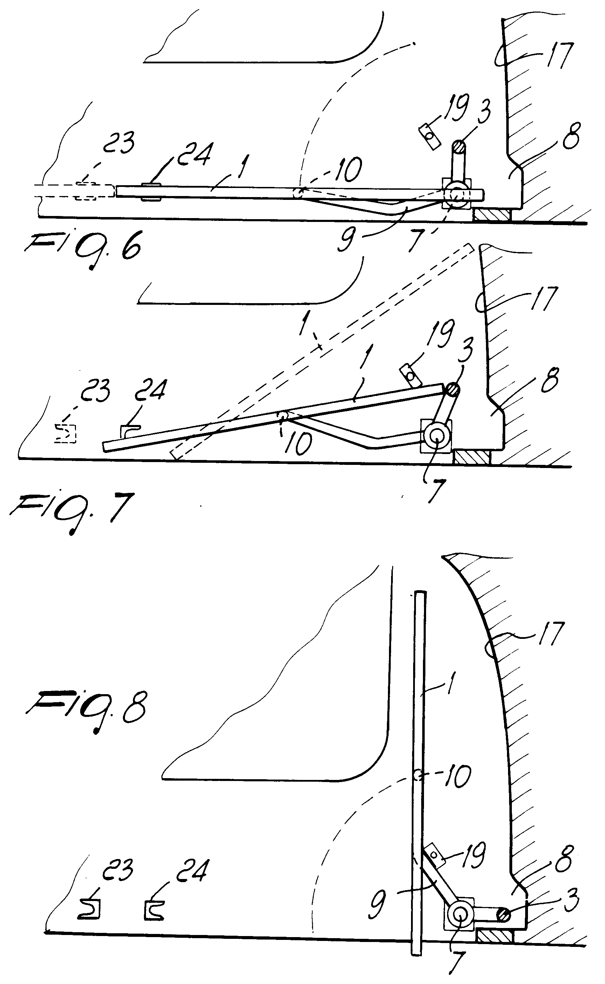

As illustrated in figures 6, 7 and 8, the door leaf 1 passes inside the actuation shaft 3 during its rotary-translatory motion, entering an accommodation seat 17 defined within the vehicle 6. Or rather, as illustrated in figures 6, 7 and 8, the accommodation seat 17 comprises a portion for the accommodation of the door leaf 1 and a region for the movement of the actuation shaft 3.

The angular setting ring 12 peripherally comprises a reference notch 18 for coupling and angularly setting the first arm 9 and the second arm 11 with respect to the cylinder-and-piston unit 13, so as to configure the door leaf 1 for correct opening and closing. This angular setting is performed during assembly and checked during the testing of the vehicle 6.

A stop pawl 19 is fixed on the floor 8 of the vehicle 6 and delimits the movement of the first arm 9.

The front door 5 of the vehicle 6 furthermore comprises a conventional door leaf 20, and both door leaves 1 and 20 are connected, by means of respective sliding engagement pivots 21 and 22, to respective sliding guides (not illustrated) within the upper cross-member 4. Pivots 21 and 22 and guides are in any case of a per se known type. Closing stop elements 23 and 24 are instead fixed to the floor 8 of the vehicle 6, and the door leaves 1 and 20 engage therein.

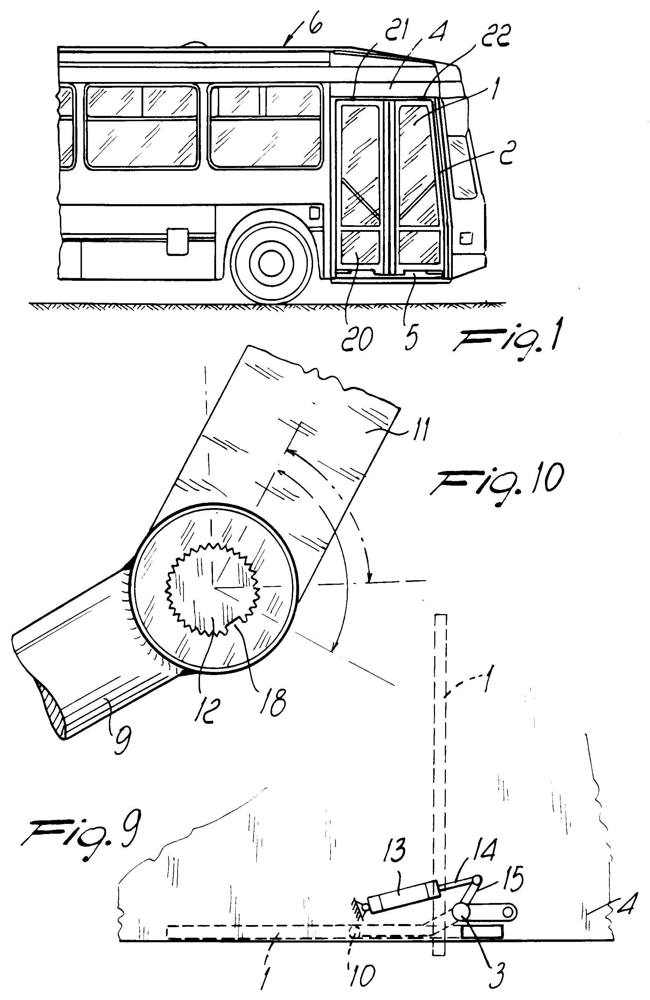

As illustrated in figure 1, the front of the vehicle 6 can thus be advantageously inclined so as to improve the streamline of said vehicle. Although the illustrated inclination is relatively small, it has been observed that a fuel saving estimated to be of the order of 2-4% is conveniently obtained, according to the routes, with respect to buses currently in use.

Furthermore, the inclination of the front advantageously reduces the volume of the driver's compartment, changing its shape and allowing better and easier air conditioning thereof.

The invention thus conceived is susceptible to numerous modifications and variations, all of which are within the scope of the inventive concept. All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Door leaf with combined rotary-translatory motion, particularly for transport vehicles and the like, characterized in that it comprises a door leaf (1) which has one vertical side (2) tapered from the bottom upward and is connected, by means of adjustable lever systems, to a shaft (3) for the actuation of the motion of said door leaf (1) whose shape is complementary to the taper (2) of said door leaf, said shaft (3) being connected, by means of lever systems (9,10,15), within an upper cross-member (4) preferably of a front door (5) of a transport vehicle (6), to means (13) for the selective actuation of the opening and closing of said door leaf (1).

2. Door leaf with combined rotary-translatory motion according to claim 1, characterized in that said adjustable lever systems are pivoted to the floor (8) of said vehicle (6) at one pivoting point (7) and comprise a first arm (9) which connects the pivoting point (7) of said adjustable lever systems to said door leaf (1) and a second arm (11) which connects said pivoting point (7) to the lower end of said actuation shaft (3), said first arm (9) and said second arm (11) being rigidly rotationally associable by means of an angular setting ring (12) arranged on said pivoting point (7).

3. Door leaf with combined rotary-translatory motion according to the preceding claims, characterized in that said selective actuation means comprise a cylinder-and-piston unit (13) which is arranged within said upper cross-member (4) of said door (5) and is fixed to said vehicle (6) so as to be able to move angularly, said piston (14) of said unit (13) being fixed eccentrically by means of said lever system, constituted by a third arm (15), to the upper end of said actuation shaft (3).

4. Door leaf with combined rotary-translatory motion according to one or more of the preceding claims, characterized in that said pivoting point (7) defines a rotation axis (16), said upper end of said actuation shaft (3), which is connected to said third arm (15), being coaxial to said rotation axis (16).

5. Door leaf with combined rotary-translatory motion according to one or more of the preceding claims, characterized in that said door leaf (1) passes within said actuation shaft (3) during its rotary translatory motion and enters an accommodation seat (17) defined within said vehicle (6).

6. Door leaf with combined rotary-translatory motion according to one or more of the preceding claims, characterized in that said angular setting ring (12) peripherally comprises a reference notch (18) for coupling and angularly setting said first arm (9) and said second arm (11) with respect to said cylinder-and-piston unit (13).

7. Door leaf with combined rotary-translatory motion according to one or more of the preceding claims, characterized in that said first arm (9) comprises two branches which delimit an obtuse angle between them.

8. Door leaf with combined rotary-translatory motion according to one or more of the preceding claims, characterized in that a stop pawl (19) is fixed on said floor (8) of said vehicle (6) and delimits the movement of said first arm (9).

9. Transport vehicle, characterized in that its front door is constituted by a conventional door leaf (20) and by a door leaf according to claims 1 to 8.

Fig.1

Fig.10

Fig.9

Fig.2

Fig.3

Fig.4

Fig.5

EP 0 492 445 A2

Fig. 6

Fig. 7

Fig. 8